# EUROPEAN PATENT SPECIFICATION

(11) **EP 3 194 313 B1**
(45) Date of publication and mention of the grant of the patent: **10.06.2020**
(21) Application number: 15839718.2
(22) Date of filing: 20.08.2015
(51) Int. Cl.: B65G 65/40, B65G 53/04, B65G 53/34, B65G 53/40

(54) **METHOD FOR FEEDING DOSES OF FLUIDISABLE MATERIALS**
VERFAHREN ZUM ZUFÜHREN VON DOSEN VON FLUIDISIERBAREN MATERIALIEN
PROCÉDÉ POUR DÉLIVRER DES DOSES DE MATÉRIAUX POUVANT ÊTRE FLUIDISÉS

(30) Priority: 12.09.2014 NO 20141107
(43) Date of publication of application: 26.07.2017
(73) Proprietor: Norsk Hydro ASA, 0240 Oslo (NO)
(72) Inventor: DYRØY, Are, N-3920 Porsgrunn (NO); KARLSEN, Morten, NO-6884 Øvre Årdal (NO); LILLEBY, Anders, N-6885 Årdalstangen (NO)
(74) Representative: Berg, André
(86) International application number: PCT/NO2015/000020
(87) International publication number: WO 2016/039629

(56) References cited:
- WO-A1-84/01560
- WO-A1-2007/072084
- WO-A1-2008/148406
- DE-A1- 2 500 032
- DE-A1- 3 125 045
- FR-A1- 2 952 363
- GB-A- 722 176
- JP-U- H0 158 533
- US-A- 2 919 159
- US-A- 2 919 159
- US-A- 4 279 549
- US-A- 4 930 691
- US-A- 4 930 691
- US-A- 5 299 694
- US-A- 5 299 694

## Description

The present invention relates to a feeder and a method for feeding fluidisable powder materials, such as alumina and fluoride. The feeder comprises the following main components; a reservoir, a discharge tube and a discharging air-slide. In particular, the feeder is designed for feeding alumina and/or fluoride to aluminium electrolysis cells of the Hall-Heroult type with prebaked anodes.

Several feeder designs have been proposed. In US 4930691 there is disclosed a pneumatic dosimeter and a method according to the preamble of claim 1 for providing exact dosage of pulverulent materials, for instance for supplying aluminium oxide and fluoride to an aluminium electrolytic cell. The dosimeter comprises a vessel with an upper chamber which at the bottom is provided with a fluidizing device in the form of a fluidizing canvas with an underlying chamber which is connected to an air source via a pipe line. The vessel is provided with an inlet for the supply of pulverulent material from a supply tank or hopper to the upper chamber, and an outlet opening for discharging the chamber. At least one fluidizing channel or pipe is provided between the supply tank and the vessel. This channel is provided with a fluidizing wall or fluidizing canvas which is connected to an air supply source through a pipe line. The filling and emptying of the chamber is carried out by solenoid valves which are provided in the pipe line connected to the vessel and the pipe line connected to the channel, respectively. The solenoid valves are controlled by a PLS governor or a processor such that air is supplied to the channel and the vessel according to a preferred time and frequency program.

JP H01 58533 U discloses means for feeding doses of fluidisable materials where a vertical tube connects a supply with a discharging air slide.

One problem with available feeders for powder materials, even feeders provided with a control volume, is that the dosages leaving the apparatus have high variance and are dependent on the degree of filling in the control volume or the volume chamber due to hydrostatic effects (pgh). This is in particular a challenge when dosing small quantities.

According to the present invention, the variation due to the hydrostatic effects can be omitted by the introduction of a distance (discharge) tube between a reservoir (volume chamber) and the discharging air-slide, or in an alternative between a cell air-slide and the discharging air-slide.

Further, a reduction in the relative standard deviation (RSD/Cᵥₐᵣ), from typical 12-16% to 2% or less has been observed. This will represent an accuracy improvement with a factor of 6-8.

The cost of the feeder is approximately the same as a conventional feeder or less. Furthermore, the present time based Pressure Independent Aerated Feeder (PIAF) represents a simplified construction and it will demand less space in terms of width and height.

With the increasing focus to improve the output of the pots (the electrolysis cells), and also to diminishing the inter-polar distance, the need for accuracy in feeding the pots is continuously increasing.

This and further advantages can be achieved in accordance with the invention as defined in claim 1.

The present invention shall be further explained by examples and figures where:
Fig. 1a, 1b discloses one prior art feeder, and the risk of establishing a variable hydrostatic situation in the apparatus,
Fig. 2a, 2b discloses one first embodiment of the feeder, the feeder being provided with a container representing the reservoir,
Fig. 3a, 3b discloses one second embodiment of the feeder, the feeder being provided with a fluidised conveyor representing the reservoir,
Fig. 4 discloses the performance of a prototype feeder in accordance with the invention.

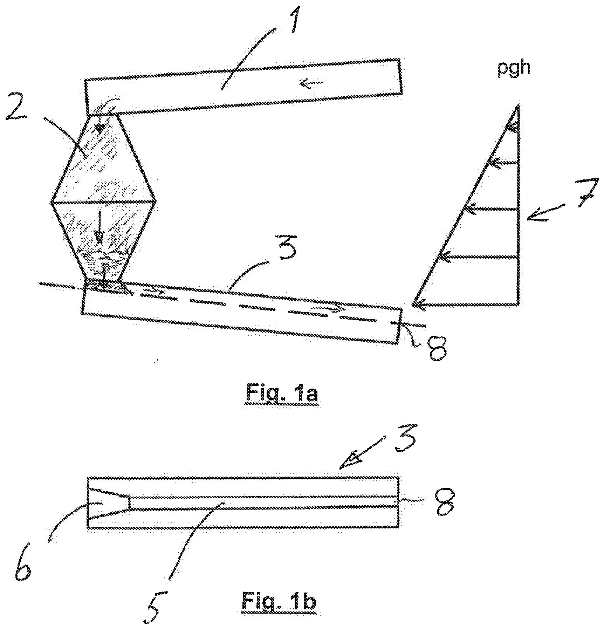

In Fig. 1a there is shown a feeder of known type having a supplying air slide 1, a reservoir 2 and a discharging air slide 3. Figure 1b discloses more details related to the discharging air slide 3 (seen from above), where 6 refers to a first fluidising element and 5 to a second fluidising element. Reference numeral 8 indicates an outlet. In the right part of Figure 1a, diagram 7 indicates the static pressure distribution pgh inside the reservoir 2 at the level of the discharging air slide 3. It will be seen that the static pressure increases with the filling level in the reservoir.

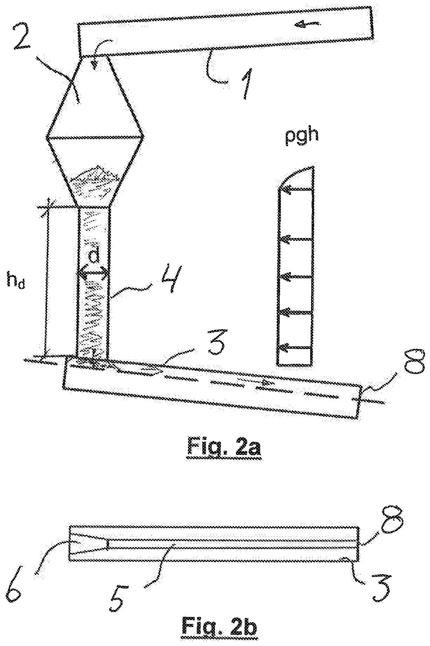

In Fig. 2a there is shown a feeder in accordance with the present invention, having a supplying air slide 1, a reservoir 2 and a discharging air slide 3 with an outlet 8. Between the reservoir 2 and the discharging air slide 3 there is arranged a distance tube 4. The distance tube has an outlet that ends above one end of the discharging air slide 3, allowing an angle of repose to be formed onto the discharging air slide.

Figure 2b discloses more details related to the discharging air slide 3 (seen from above), where reference numeral 6 refers to a first fluidising element arranged below the outlet of the distance tube 4. Reference numeral 5 refers to a second fluidising element that, when activated, will sustain transport of the powder material in the discharging air slide to an outlet 8.

In the right part of Figure 2a, there is indicated in diagram 7 that the static pressure distribution pgh inside the feeder at the level of the discharging air slide 3 (i.e. at the outlet of the distance tube 4) will be unaffected by the filling level.

This effect is achieved due to the fact that the distance tube 4 has a certain height 'hd' to diameter 'd' to ratio. According to the invention, the value of 'h_{d}' is several times that of 'd'.

When the fluidised zone 6 beneath the distance tube is inactivated during operation, the discharging air slide 3 will be provided with powder material at the bottom of the distance tube 4 in accordance with the powder's angle of repose. As an effect, the dosage size has shown to become more accurate during activation of the fluidising element 5. It is of importance that the fludised element's extension towards the area below the distance tube 4 is adapted to the material's angle of repose to secure a stable access to the supply of materials.

By maximizing the length of the tube h_{d} to minimum 7d according to the invention, it has been observed that the discharge control can be improved to a quality level where the reservoir 2 can be omitted, at least when the filling level in the tube is maintained at the level h_{d} or higher.

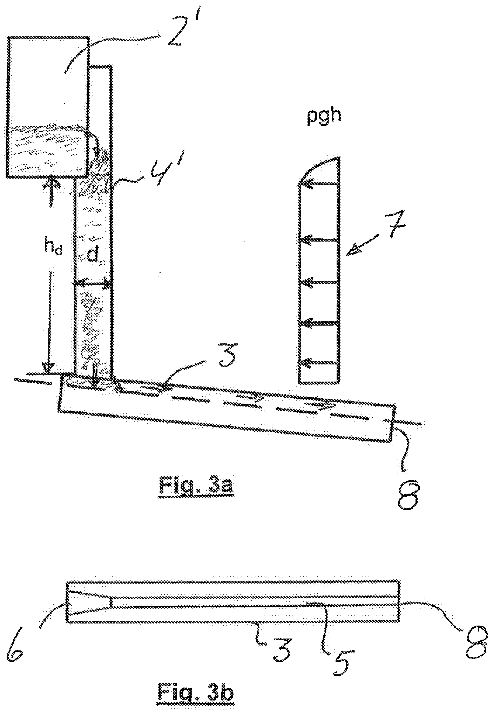

In Fig. 3a there is shown a second embodiment of a feeder in accordance with the present invention having a reservoir 2' that can be a cell air-slide for supplying powder materials to an electrolysis cell (not shown), and a discharging air slide 3 with an outlet 8. Between the reservoir 2' and the discharging air slide 3 there is, similar to that of Fig. 2a, arranged a distance tube 4'. The distance tube has an outlet that ends above the discharging air slide 3, allowing an angle of repose to be formed onto the discharging air slide. Similar to that of Fig. 2a, the height / diameter ratio of the distance tube is of importance with regard to minimize the effects of the hydrostatic pressure. Figure 3b discloses more details related to the discharging air slide 3 (seen from above), where reference numeral 6 refers to a first fluidising element arranged below the outlet of the distance tube 4'. Reference numeral 5 refers to a second fluidising element that, when activated, will sustain transport of the powder material in the discharging air slide to an outlet 8.

The present feeder can operate with a high degree of accuracy and also independent of the hydrostatic fill level in the reservoir 2, 2' due to the implemented distance tube 4, 4' (dispense head) as seen in Figure 2a and 3a, and the fact that the dosing fluidised element 6 below the distance tube outlet is inactive.

The distance tube 4, 4' and the inactive zone below it ensure constant pressure/tension in the bulk mass, hence feeding into the fluidised zone under constant conditions. In Figure 2a-b and 3a-b, two versions of the feeder are shown. In Figure 2a-b the feeder includes the control volume 2 utilised on the previous feeders.

In Figure 3, the feeder as foreseen in the future will dismiss this control volume, due to the high achieved accuracy, i.e. a less complicated construction. All of the aspects of the new feeder concept can be designed through known powder technology theory. Hence any application can be applied given the basic data for the job.

Furthermore, the dosage part of the feeder can also be equipped with additional internal side walls to stabilise and minimise the friction of the dose application (not shown).

The idea itself builds on implementing the following into the feeder:
- Apply a minimum dispense head before entering the dosing element
- Implementing an in-active fluidizing zone below dispense head.
- Remove opportunity of fluidized powder and bulk powder friction, by increasing the dosing channel wall height or applying additional internal walls
- And finally, but also optional, remove the need for control volume, due to the increase in dosage accuracy

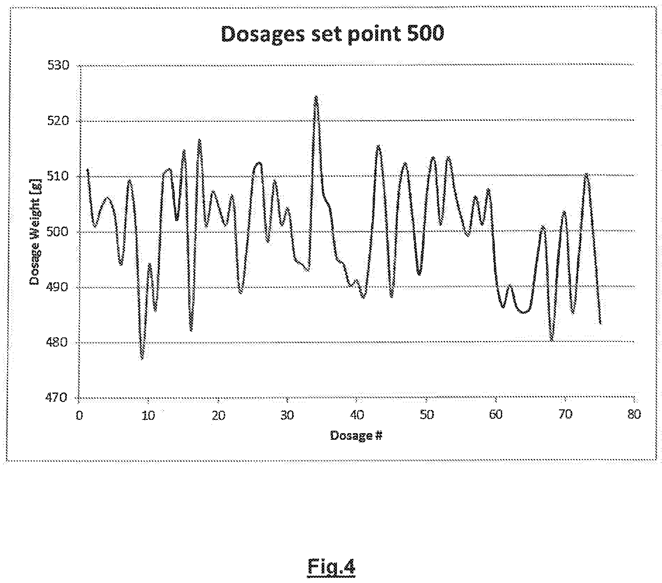

A prototype of a feeder based upon the principles of the invention was established and its performance was tested, see also Figure 4. The following results were established:

| Statistics for dosages | | When in operation |
|---|---|---|
| Mean | 500 | [g] set point |
| Confidence Level(99,5%) | 3,27 | [g] ± variation weight |
| Confidence Level(99,5%) | 0,7 % | [%] ± variation set point |

## Claims

1. Method for feeding doses of fluidisable materials, comprising a supply of material (1, 2, 2') and a discharging air slide (3) with at least one fluidisable element (5) in its bottom, where said element, when activated, being able to transport material towards one outlet (8) for controlled dosage,
the material is fed from the supply (1, 2, 2') to the discharging air slide (3) via a substantially vertical distance tube (4, 4') that has a substantial circular cross-section and further a height (h_{d}) and diameter (d),
wherein the ratio h_{d}:d is at least 7:1, **characterised in that** the tube (4,4') ensures a constant hydrostatic pressure towards the discharging air slide (3) for filling levels in the distance tube (4, 4') maintained at the level h_{d} or higher and for different filling levels in the supply of material upstream said tube.

2. Method according to claim 1,
**characterised in that**
the material is either alumina or fluoride that is fed to an electrolysis cell for aluminium production.

3. Method according to claim 1,
**characterised in that**
the discharging air slide (3) have an additional fluidisable element (6) in its bottom, and further arranged below the outlet of the distance tube (4, 4'), allowing the material to form an angle of repose when not activated and from which material is transported when the fluidisable element (5) is activated.

4. Method according to claim 3,
**characterised in that**
material can be flushed through the system when activating the fluidsable element (6) simultaneously with the fluidisable element (5).

## Patentansprüche

1. Verfahren zum Zuführen von Dosen von fluidisierbaren Materialien, umfassend eine Zufuhr von Material (1, 2, 2') und eine Abgabeluftgleitvorrichtung (3) mit mindestens einem fluidisierbaren Element (5) in ihrem Unterteil, wobei das Element, wird es aktiviert, in der Lage ist, Material zu einem Auslass (8) zur regulierten Dosierung zu transportieren,
wobei das Material von der Zufuhr (1, 2, 2') zur Abgabeluftgleitvorrichtung (3) über eine im Wesentlichen senkrechte Abstandröhre (4, 4') geführt wird, die einen im Wesentlichen kreisförmigen Querschnitt und des Weiteren eine Höhe (h_{d}) und einen Durchmesser (d) aufweist,
wobei
das Verhältnis von h_{d}:d mindestens 7:1 beträgt, **dadurch gekennzeichnet, dass** die Röhre (4, 4') einen gleichbleibenden hydrostatischen Druck auf die Abgabeluftgleitvorrichtung (3) zu für Füllniveaus in der Abstandröhre (4, 4'), die bei dem Niveau h_{d} oder höher gehalten werden, und für verschiedene Füllniveaus in der Zufuhr von Material stromaufwärts von der Röhre sicherstellt.

2. Verfahren nach Anspruch 1,
**dadurch gekennzeichnet, dass**
das Material entweder Aluminiumoxid oder Fluorid ist, das zu einer Elektrolysezelle zur Aluminiumherstellung geführt wird.

3. Verfahren nach Anspruch 1,
**dadurch gekennzeichnet, dass**
die Abgabeluftgleitvorrichtung (3) ein zusätzliches fluidisierbares Element (6) in ihrem Unterteil aufweist und ferner unter dem Auslass der Abstandröhre (4, 4') angeordnet ist, was dem Material gestattet, einen Ruhewinkel zu bilden, wenn es nicht aktiviert wird, und von welchem Material transportiert wird, wenn das fluidisierbare Element (5) aktiviert wird.

4. Verfahren nach Anspruch 3,
**dadurch gekennzeichnet, dass**
Material durch das System gespült werden kann, wenn das fluidisierbare Element (6) gleichzeitig mit dem fluidisierbaren Element (5) aktiviert wird.

## Revendications

1. Procédé de délivrance de doses de matériaux pouvant être fluidisés, comprenant un approvisionnement de matériau (1, 2, 2') et une glissière d'air de déchargement (3) avec au moins un élément que l'on peut fluidiser (5) dans sa partie inférieure, où ledit élément, quand il est activé, est capable de transporter le matériau vers une sortie (8) pour un dosage contrôlé,
le matériau est délivré de l'approvisionnement (1, 2, 2') à la glissière d'air de déchargement (3) via un tube de distance essentiellement vertical (4, 4') qui a une section transversale importante circulaire et en outre une hauteur (h_{d}) et un diamètre (d),
le rapport h_{d}:d étant au moins de 7:1, **caractérisé en ce que** le tube (4, 4') assure une pression hydrostatique constante vers la glissière d'air de déchargement (3) pour remplir les niveaux dans le tube de distance (4, 4') maintenu au niveau h_{d} ou supérieur et pour différents niveaux de remplissage dans l'approvisionnement de matériau en amont dudit tube.

2. Procédé selon la revendication 1,
**caractérisé en ce que**
le matériau est de l'alumine ou du fluorure qui est délivré à une cellule d'électrolyse pour la production d'aluminium.

3. Procédé selon la revendication 1,
**caractérisé en ce que**
la glissière d'air de déchargement (3) a un élément que l'on peut fluidiser supplémentaire (6) dans sa partie inférieure, et en outre disposé au-dessous de la sortie du tube de distance (4, 4'), permettant au matériau de former un angle de repos quand il n'est pas activé et duquel le matériau est transporté quand l'élément pouvant être fluidisé (5) est activé.

4. Procédé selon la revendication 3,
**caractérisé en ce que**
le matériau peut être évacué à travers le système quand on active l'élément pouvant être fluidisé (6) simultanément avec l'élément pouvant être fluidisé (5) .
